Europäisches Patentamt

European Patent Office

Office européen des brevets

(11) Publication number: **0 315 238 B1**

# EUROPEAN PATENT SPECIFICATION

(45) Date of publication of patent specification: **17.03.93**

(51) Int. Cl.⁵: **B29C 55/00**, C08J 5/18, //B29K23:00,B29K105:02

(21) Application number: **88202317.9**

(22) Date of filing: **18.10.88**

(54) Bi-oriented films of ethylene/alfa -olephin copolymers.

(30) Priority: **02.11.87 IT 2248287**

(43) Date of publication of application:
**10.05.89 Bulletin 89/19**

(45) Publication of the grant of the patent:
**17.03.93 Bulletin 93/11**

(84) Designated Contracting States:
**AT BE CH DE ES FR GB GR LI LU NL SE**

(56) References cited:
**EP-A- 0 057 238**
**EP-A- 0 168 928**
**EP-A- 0 240 705**

**PATENT ABSTRACTS OF JAPAN, vol. 10, no. 299 (M-524)[2355], 11th October 1986; & JP-A-61 112 627 (SHOWA DENKO) 30-05-1986**

(73) Proprietor: **ENICHEM ANIC S.p.A.**
**Via Ruggero Settimo 55**
**I-90139 Palermo(IT)**

(72) Inventor: **Di Pasquale, Giovanni**
**Via Kennedy 16**
**I-20097 San Donato Milanese Milan(IT)**
Inventor: **Flocco, Luigi**
**Via Ravenna 10/A**
**I-20097 San Donato Milanese Milan(IT)**

(74) Representative: **Roggero, Sergio et al**
**Ing. Barzanò & Zanardo Milano S.p.A. Via Borgonuovo 10**
**I-20121 Milano (IT)**

Rank Xerox (UK) Business Services
(3.10/3.5x/3.0.1)

## Description

The present invention relates to bi-oriented, heat-sealable and heat-shrinking films endowed with good optical and mechanical characteristics, obtained by means of the extrusion and bi-axial stretching of a blend of ethylene/$\alpha$-olefin copolymers. Such films are known from e.g. EP-A- 168928.

In the art, oriented and heat-shrinking polyethylene films are known, which are used in the packing of alimentary product and other consumer products.

A technical problem to be faced when dealing with such films, is of combinining characteristics of good mechanical strength with their clarity.

For such a purposes, it was proposed to submit the polyethylene film to a cross-linking, e.g., by means of a treatment thereof with gamma-rays, generally carried out after the extrusion step, and before the stretching step. As an alternative, it was proposed that the film should be prepared by starting from a blend of linear polyethylene and high-density polyethylene, by the term "linear polyethylene", a copolymer of ethylene with an $\alpha$-olefin being meant, which is prepared by means of low-pressure processes.

According to GB-A - . 2.097.324, heat-shrinking films of good quality are prepared by extruding a copolymer of ethylene with an $\alpha$-olefin of from $C_8$ to $C_{18}$, having two distinct crystallite melting points, and stretching said extruded copolymer by operating within a temperature range intermediate between said two melting points. According to this patent application, the above indicated copolymer can be used in blend with a homopolymer or another copolymer of ethylene.

The present Applicant found now that heat-sealable and heat-shrinking polymers endowed with good general characteristics, useful in the field of packing, can be obtained by means of the extrusion and biaxial Stretching of a particular blend of ethylene copolymers, by operating in the absence of cross-linking treatments.

In accordance therewith, the present invention relates to heat-sealable and heat-shrinking bi-oriented films, endowed with good optical and mechanical characteristics, which are obtained by means of the extrusion and bi-axial stretching of a blend of ethylene/$\alpha$-olefin copolymers, said blend comprising:

a) from 95% to 99,9% by weight of an ethylene/octene-1 copolymer; and
b) from 5% to 0,1% by weight of an ethylene/butene-1 or ethylene/hexene-1 copolymer;
with said copolymers having a value of density comprised within the range of from 0,900 to 0,940 g/cc.

The above-mentioned ethylene/$\alpha$-olefin copolymers can contain up to about 15% by weight of $\alpha$-olefin comonomer, and are obtained by means of low-pressure polymerization processes.

In the preferred form of practical embodiment, the amount of (b) component in the blend of copolymers is comprised within the range of from 0,2% to 1,0% by weight, and is typically of the order of 0,5% by weight.

The films according to the present invention can have thicknesses of up to 100 $\mu$m, and normally comprised within the range of from 20 $\mu$m to 40 $\mu$m, and can be obtained according to the normal techniques of extrusion and stretching.

In the preferred form of practical embodiment, the linear slit-die extrusion technique is used, wherein the extrusion is followed by the orientation of the film beforehand in the machine (longitudinal ) direction, and then in the transversal direction.

More particularly, the process is carried out by mixing the granules of both copolymers, and preparing a homogeneous blend by melting inside a screw extruder. The homogeneous blend in the molten state so obtained is filmed through the linear slit of a linear slit-die, and the obtained film is submitted to a quick quenching, e.g., by contact with water.

The cooled film is then stretched in the longitudinal direction (i.e., in the machine direction), by means of a series of increasing-speed revolving rolls, and operating at a temperature comprised within the range of from 50°C to 130°C, and preferably of the order of from 110°C to 120°C. The stretching ratio can be as high as 1:9, but it will be preferably comprised within the range of from 1.5 to 1:6.

The film is then stretched in the transversal direction (i.e., in the direction perpendicular to the machine direction), e.g., by means of a film-stretching chain, and operating at a temperature comprised within the range of from 80°C to 130°C, and preferably of the order of from 110°C to 120°C.

In this case too, the stretching ratio can reach a maximum value as high as 1:9, but it will be preferably of the order of 1:5-1:6.

The so obtained bi-oriented film is heat-sealable and heat-shrinking, and is endowed with well-balanced optical and mechanical characteristics, as it will be clear from the following experimental example, which is reported for the purpose of exemplifying the present invention, without limiting the purview thereof.

Example

As the (a) component of the polymeric blend, an ethylene/octene-1 copolymer is used, which has the following characteristics :

| | |
|---|---|
| - Melting temperature ($^{o}$C), determination by DSC | 126 |
| - Density (g/cm$^3$) | 0,919 |
| - Melt-flow index (g/10 minutes) (190$^{o}$C; 2,16 kg) | 2,7 |
| - Shear sensitivity | 32 |

As the (b) component, an ethylene/butene-1 copolymer is used, which has the following characteristics:

| | |
|---|---|
| - Melting temperature ($^{o}$C), determination by DSC | 123 |
| - Density (g/cc) | 0,919 |
| - Melt-flow index (g/10 min) (190$^{o}$C; 2.16 kg) | 2,5 |
| - Shear sensitivity | 30 |

99,5 Parts by weight of the (a) component is mixed with 0,5 parts by weight of the (b) component, and the blend is melted and homogenized in the molten state, in a helical-screw extruder at 230$^{o}$C.

The homogeneous blend is extruded by means of a linear slit-die extruder (at the temperature of 260$^{o}$C),with a flow rate of 50 kg/h, and with an end film throughput of 30 m/min. When it exits the die, the film is cooled in water at the temperature of 15$^{o}$C, is then heated to 110$^{o}$C-120$^{o}$C, and is submitted to a first orientation in the machine direction with a stretch ratio of 1:5, by operating on revolving rolls, and is finally submitted to a second orientation in the direction perpendicular to the machine direction, by means of film-stretching chains, by operating inside an oven heated at 110$^{o}$C-120$^{o}$C, and with a stretch ratio of 1:5.

A bi-axially oriented film is thus obtained, which has a thickness of the order of 20 $\mu$m, and has the following characteristics:

- Melt-flow index                                          2,7

  (g/10 minutes) (ASTM D 1238)

- Density          .                                       0,919

  (g/cc) (ASTM D 1505)

- Impact strength                                    110

  (Dart Drop Test)

  (kJ/m) (ASTM D1709)

- Tearing strength                        MD       5,3

  (Elmendorf)                             TD       9,8

  (kN/m) (ASTM D1322)

- Tensile strength                        MD       96

  (N/mm$^2$) (ASTM D 828 B)               TD       115

- Elongation at break                     MD       250

  (%) (ASTM D 882 B)                      TD       115

- Secant modulus 1%                       MD       267

  (N/mm$^2$) (ASTM D 882 B)               TD       446

- Piercing strength                             5.043

  (N/m) (*)

- Test end elongation                              94

  (piercing)

4

```
         (%) (*)

       - Gloss 45°                                              96

         (%) (ASTM D 2457)

       - Haze                                                    1

         (%) (ASTM D1003)

       - Clarity                                                0,2

         (%) (**)
```

(*)  Determination of the piercing strength by means of a metal point. The test consists in stretching a film in the direction longitudinal to the machine lines, and determining the necessary force in order to perforate it by means of a metal point.

(**) Determination of the clarity of a plastic film by means of a light beam. The test consists in measuring the light intensity passing through the film thickness.

## Claims
## Claims for the following Contracting States : AT, BE, CH, DE, FR, GB, LI, LU, NL, SE

1. Thermoweldable and heat-shrinking bi-oriented films, endowed with good optical and mechanical characteristics, obtained by means of the extrusion and bi-axial stretching of a blend of ethylene/α-olefin copolymers, said blend consisting of:
   a) from 95% to 99.9% by weight of an ethylene/octene-1 copolymer; and
   b) from 5% to 0.1% by weight of an ethylene/butene-1 or ethyenel/hexene-1 copolymer;
   with said copolymers having a value of density comprised within the range of from 0,900 g/cm$^3$ to 0,940 g/cm$^3$.

2. Films according to claim 1, characterized in that the content of (b) component in the blend of copolymers is comprised within the range of from 0,2% to 1,0% by weight.

3. Films according to claim 2, characterized in that the content of (b) component in said blend of copolymers is of the order ot 0,5% by weight.

4. Films according to claims from 1 to 3, characterized in that they have a thickness of up to 100 μm.

5. Films according to claim 4, characterized in that said thickness is of the order of 20-40 μm.

## Claims for the following Contracting State : ES

1. Process for preparing thermoweldable and heat-shrinking bi-oriented films, endowed with good optical and mechanical characteristics, characterized in that it comprises the steps of extruding and biaxially stretching a blend of ethylene/alpha-olefin copolymers consisting of:

(a) from 95% to 99,9% by weight of an ethylene/octene-1 copolymer, and
(b) from 5% to 0,1% by weight of an ethylene/butene-1, or ethylene/hexene-1, copolymer,
with said copolymers having a density of from 0,900 g/cm$^3$ to 0,940 g/cm$^3$.

2. Process according to Claim 1, characterized in that the content of the (b) component in the blend of copolymers is from 0,2% to 1,0% by weight.

3. Process according to Claim 2, characterized in that the content of the (b) component in the blend of copolymers is 0,5% by weight.

4. Process according to Claim 1, characterized in that the film is extruded to a thickness of up to 100 $\mu$m.

5. Process according to Claim 4, characterized in that the film thickness is from 20 um to 40 $\mu$m.

**Patentansprüche**
**Patentansprüche für folgende Vertragsstaaten : AT, BE, CH, DE, FR, GB, GR, LI, LU, NL, SE**

1. Heißsiegelbare und wärmeschrumpfende, zweifach orientierte Folien, ausgestattet mit guten optischen und mechanischen Eigenschaften und erhalten durch Extrusion und bisaxiales Strecken eines Gemisches von Ethylen/$\alpha$-Olefin-Copolymeren, welches Gemisch aus:
   a) von 95 bis 99,9 Gew.-% eines Ethylen/Octen-1-Copolymers und
   b) von 5 bis 0,1 Gew.-% eines Ethylen/Buten-1-Copolymers oder Ethylen/Hexen-1-Copolymers
   besteht, wobei diese Copolymere eine Dichte im Bereich von 0,900 g/cm$^3$ bis 0,940 g/cm$^3$ aufweisen.

2. Folien nach Anspruch 1, dadurch gekennzeichnet, daß der Gehalt an Komponente (b) in dem Copolymerengemisch im Bereich von 0,2 bis 1,0 Gew.-% liegt.

3. Folien nach Anspruch 2, dadurch gekennzeichnet, daß der Gehalt an Komponente (b) in dem Copolymerengemisch in der Größenordnung von 0,5 Gew.-% liegt.

4. Folien nach den Ansprüchen 1 bis 3, dadurch gekennzeichnet, daß sie eine Stärke von bis zu 100 $\mu$m aufweisen.

5. Folien nach Anspruch 4, dadurch gekennzeichnet, daß diese Stärke im Bereich von 20-40 $\mu$m liegt.

**Patentansprüche für folgenden Vertragsstaat : ES**

1. Verfahren zur Herstellung von heißsiegelbaren und wärmeschrumpfenden zweifach orientierten Folien, die mit guten optischen und mechanischen Eigenschaften augestattet sind, dadurch gekennzeichnet, daß es die Stufen des Extrudierens und biaxialen Streckens eines Gemisches von Ethylen/$\alpha$-Olefin-Copolymeren umfaßt, das aus:
   a) von 95 bis 99,9 Gew.-% eines Ethylen/Octen-1-Copolymers und
   b) von 5 bis 0,1 Gew.-% eines Ethylen/Buten-1-Copolymers oder Ethylen/Hexen-1-Copolymers
   besteht, wobei diese Copolymere eine Dichte von 0,900 g/cm$^3$ bis 0,940 g/cm$^3$ aufweisen.

2. Verfahren nach Anspruch 1, dadurch gekennzeichnet, daß der Gehalt der Komponente (b) in dem Copolymerengemisch von 0,2 bis 1,0 Gew.-% liegt.

3. Verfahren nach Anspruch 2, dadurch gekennzeichnet, daß der Gehalt der Komponente (b) in dem Copolymerengemisch 0,5 Gew.% beträgt.

4. Verfahren nach Anspruch 1, dadurch gekennzeichnet, daß die Folie zu einer Stärke von bis zu 100 $\mu$m extrudiert wird.

5. Verfahren nach Anspruch 4, dadurch gekennzeichnet, daß die Folienstärke 20 $\mu$m - 40 $\mu$m beträgt.

**Revendications**
**Revendications pour les Etats contractants suivants : AT, BE, CH, DE, FR, GB, GR, LI, LU, NL, SE**

1. Films bi-orientés, thermosoudables et thermorétractables, dotés de bonnes propriétés optiques et mécaniques, obtenus par extrusion et étirage bi-axial d'un mélange de copolymères d'éthylène et d'$\alpha$-oléfine, ledit mélange étant constitué de :
   a) 95 % à 99,9 % en poids d'un copolymère d'éthylène et d'octène-1, et
   b) 5 % à 0,1 % en poids d'un copolymère d'éthylène et de butène-1 ou d'un copolymère d'éthylène et d'hexène-1,
   lesdits copolymères présentant une densité dont la valeur se situe dans l'intervalle allant de 0,900 g/cm$^3$ à 0,940 g/cm$^3$.

2. Films conformes à la revendication 1, caractérisés en ce que la teneur du mélange de copolymères en composant (b) se situe dans l'intervalle allant de 0,2 % à 1,0 % en poids.

3. Films conformes à la revendication 2, caractérisés en ce que la teneur du mélange de copolymères en composant (b) est de l'ordre de 0,5 % en poids.

4. Films conformes à l'une des revendications 1 à 3, caractérisés en ce que leur épaisseur vaut au plus 100 $\mu$m.

5. Films conformes à la revendication 4, caractérisés en ce que leur épaisseur est de l'ordre de 20 à 40 $\mu$m.

**Revendications pour l'Etat contractant suivant : ES**

1. Procédé de fabrication de films bi-orientés, thermosoudables et thermorétractables, dotés de bonnes propriétés optiques et mécaniques, caractérisé en ce qu'il comporte les étapes d'extrusion et d'étirage bi-axial d'un mélange de copolymères d'éthylène et d'$\alpha$-oléfine, constitué de :
   a) 95 % à 99,9 % en poids d'un copolymère d'éthylène et d'octène-1, et
   b) 5 % à 0,1 % en poids d'un copolymère d'éthylène et de butène-1 ou d'un copolymère d'éthylène et d'hexène-1,
   lesdits copolymères présentant une densité valant de 0,900 g/cm$^3$ à 0,940 g/cm$^3$.

2. Procédé conforme à la revendication 1, caractérisé en ce que la teneur du mélange de copolymères en composant (b) vaut de 0,2% à 1,0% en poids.

3. Procédé conforme à la revendication 2, caractérisé en ce que la teneur du mélange de copolymères en composant (b) vaut 0,5 % en poids.

4. Procédé conforme à la revendication 1, caractérisé en ce que l'on extrude un film dont l'épaisseur vaut au plus 100 $\mu$m.

5. Procédé conforme à la revendication 4, caractérisé en ce que l'épaisseur du film vaut de 20 $\mu$m à 40 $\mu$m.